# EUROPÄISCHE PATENTANMELDUNG

(11) **EP 0 940 953 A2**
(43) Veröffentlichungstag der Anmeldung: **08.09.1999**
(21) Anmeldenummer: 99104293.8
(22) Anmeldetag: 03.03.1999
(51) Int. Cl.: H04L 12/58

(54) **Automatisches E-Mail Polling**

(30) Priorität: 05.03.1998 DE 19809432
(71) Anmelder: SIEMENS AKTIENGESELLSCHAFT, 80333 München (DE)
(72) Erfinder: Carlsen, Niels-Vejrup Dr., 2930 Klampenborg (DK); Kocourek, Christine, 81549 München (DE); Vogel, Rony, 80469 München (DE)

(57) **Zusammenfassung**

Die Erfindung betrifft ein Teilnehmerendgerät (PC) mit Anbindung an ein Kommunikationsnetz. Erfindungsgemäß ist eine Abfragesteuerung (AS) vorgesehen, die zur voreinstellbaren automatischen Abfrage und/oder zum Senden von Nachrichten bei beziehungsweise zu einem Kommunikationsteilnehmer ausgebildet ist.

## Beschreibung

Die Erfindung betrifft ein Teilnehmerendgerät gemäß dem Oberbegriff des Patentanspruchs 1 und ein Verfahren gemäß dem Oberbegriff des Patentanspruchs 4.

Bei dem Teilnehmerendgerät kann es sich um eine Datenverarbeitungsanlage, wie beispielsweise einen Personal-Computer, einen Laptop oder sonstige stationäre oder mobile Computeranlagen handeln. Das Teilnehmerendgerät kann auch durch ein stationäres Telefon oder durch ein mobiles Funkgerät, beispielsweise nach dem GSM- oder DECT-Standard, realisiert sein.

Von einem solchen Teilnehmerendgerät werden als Nachrichten vorzugsweise sogenannte E-Mail zu der Rechenanlage eines Providers übertragen. Diese Rechenanlage kann beispielsweise der Internetknoten sein, der den Zugang zum Internet für die angeschlossenen Benutzer ermöglicht.

Für die Übertragung der Nachrichten zwischen dem Benutzer und dem Provider können schnurgebundene, digitale oder analoge, und auch schnurlose Kommunikationsverbindungen verwendet werden.

Zur Abfrage oder zum Übertragen von Nachrichten von dem Rechner des Benutzers zu der Rechenanlage des Providers wird eine Kommunikationsverbindung vom Rechner zu der Rechenanlage aufgebaut. Beim Benutzer vorhandene Nachrichten beziehungsweise E-Mails werden zum Provider übertragen, und beim Provider gespeicherte E-Mails können zum Benutzer übertragen und dort gelesen werden. Diese Vorgänge erfordern ein regelmäßiges tätig werden des Benutzers. Dies ist aufwendig für den Benutzer. Eine Alternative wäre eine ständige Verbindung zwischen dem Benutzer und dem Provider. Diese ist aber mit hohen Kosten verbunden.

Der Erfindung liegt die Aufgabe zugrunde, den Nachrichtenaustausch zwischen dem Benutzer und dem Provider zu vereinfachen.

Diese Aufgabe wird erfindungsgemäß für ein Teilnehmerendgerät durch die im Patentanspruch 1 und für ein Verfahren durch die im Patentanspruch 4 angegebenen Merkmale gelöst.

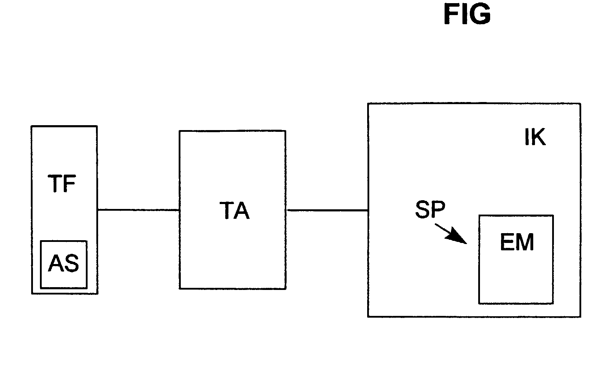

Im folgenden wird die Erfindung anhand eines in der Zeichnung dargestellten Ausführungsbeispieles beschrieben.

In der einzigen Figur ist ein Personal-Computer PC dargestellt, der über ein Telefonamt TA mit einem Internetknoten IK verbunden ist. Der Internetknoten IK ist beispielsweise die Rechenanlage eines Providers, über den der Zugang zum Internet für den Benutzer ermöglicht wird.

Der Internetknoten IK weist einen, für einen Benutzer spezifischen, Speicher SP auf. In diesem Speicher SP sind die an diesen Benutzer adressierten E-Mails EM hinterlegt.

Erfindungsgemäß weist der Personal-Computer PC eine Abfragesteuerung AS auf. Diese Abfragesteuerung AS kann beispielsweise durch eine entsprechend konzipierte Schaltung oder durch eine auf dem Personal-Computer PC ablaufende Software realisiert sein.

Von der Abfragesteuerung AS aus wird zu voreinstellbaren Zeitpunkten oder nach jeweils einer voreinstellbaren Zeitdauer automatisch eine Verbindung zum Internetknoten IK aufgebaut. Es können hierbei die Zeitpunkte und/oder die Anzahl sowie die Zeitdauer zwischen den vorgesehenen Verbindungsaufbauten eingestellt werden. Nach dem erfolgten Verbindungsaufbau werden die in der Zwischenzeit im Speicher SP abgelegten E-Mails für diesen anrufenden Benutzer zum Personal-Computer PC übertragen.

Während dieser Verbindung zum E-mail Polling können bedarfsweise Nachrichten vom Personal Computer PC zum Internetknoten IK übertragen werden. Diese Nachrichten beziehungsweise E-Mails sind vorher auf dem Rechner geschrieben worden. Der Benutzer kann damit auch Zeiten mit günstigen Telefontarifen nutzen.

Bei den übertragenen Nachrichten kann es sich um in digitaler Form vorliegende schriftliche Nachrichten, die sogenannten E-Mails handeln, oder es könnten auch verbale Texte sein, die aus einer Mailbox abgerufen werden.

Bei einer vorteilhaften Weiterbildung der Erfindung erfolgt bei einer aufgebauten Verbindung nach einer voreinstellbaren Zeitspanne ein erzwungener Abbruch dieser Kommunikationsverbindung. Diese Maßnahme dient dazu, um beispielsweise bei erfolglosen Suchläufen im Internetknoten IK eine über längere Zeit bestehende Verbindung zum Benutzer zu verhindern. Hierdurch können unnütze Telefonkosten vermieden werden.

### Bezugszeichenliste

- AS: Abfragesteuerung
- TA: Telefonamt
- IK: Internetknoten
- PC: Personal-Computer
- EM: E-Mail

## Patentansprüche

1. Teilnehmerendgerät (PC) mit Anbindung an ein Kommunikationsnetz,
gekennzeichnet durch,
eine Abfragesteuerung (AS), die zur voreinstellbaren automatischen Abfrage und/oder zum Senden von Nachrichten bei beziehungsweise zu einem Kommunikationsteilnehmer ausgebildet ist.

2. Teilnehmerendgerät (PC) nach Anspruch 1,
**dadurch gekennzeichnet**, daß
die Abfragesteuerung (AS) durch, eine Kommunikationsverbindung mit dem Kommunikationsteilnehmer, aktivierbar ausgebildet ist.

3. Teilnehmerendgerät (PC) nach Anspruch 1 oder 2,
**dadurch gekennzeichnet**, daß
Mittel für den Abbruch einer Kommunikationsverbindung nach einer vorbestimmbaren Zeitdauer vorgesehen sind.

4. Verfahren zum Übertragen von Nachrichten über ein Kommunikationsnetz zwischen einem Teilnehmerendgerät (PC) und einer Datenverarbeitungsanlage (IK) bei einem Kommunikationsteilnehmer,
**dadurch gekennzeichnet**, daß
vom Teilnehmerendgerät (PC) aus automatisch mit voreinstellbaren Zeitpunkten und/oder Zeitintervallen eine Abfrage bei der Datenverarbeitungsanlage (IK) nach neuen Nachrichten und deren Übertragung zum Teilnehmerendgerät (PC) durchgeführt wird, und
bedarfsweise während der gleichen Verbindung vorhandene Nachrichten zur Datenverarbeitungsanlage (IK) übertragen werden.

5. Verfahren nach Anspruch 4,
**dadurch gekennzeichnet**, daß
die Abfrage bei jeder Kommunikationsverbindung zum Kommunikationsteilnehmer erfolgt.

6. Teilnehmerendgerät (PC) nach Anspruch 1, 2 oder 3 beziehungsweise Verfahren nach Anspruch 4 oder 5,
**dadurch gekennzeichnet**, daß
die Nachrichten E-Mails sind.
